# EUROPÄISCHE PATENTSCHRIFT

(11) **EP 2 684 762 B1**
(45) Veröffentlichungstag und Bekanntmachung des Hinweises auf die Patenterteilung: **18.04.2018**
(21) Anmeldenummer: 13175471.5
(22) Anmeldetag: 08.07.2013
(51) Int. Cl.: B62B 3/02, B62B 5/06, B62B 5/08, B62B 7/08, B62B 9/26

(54) **Vorrichtung zum Fortbewegen von Gütern und einer Person**
Device for transporting goods and a person
Dispositif de transport de marchandises et d'une personne

(30) Priorität: 09.07.2012 DE 202012102518 U
(43) Veröffentlichungstag der Anmeldung: 15.01.2014
(73) Patentinhaber: Ponticelli, Pius, 4616 Kappel (CH); Campanini, Giulia, 43121 Parma (IT)
(72) Erfinder: Ponticelli, Pius, 4616 Kappel (CH); Campanini, Giulia, 43121 Parma (IT)
(74) Vertreter: Patentanwälte und Rechtsanwalt Weiß, Arat & Partner mbB

(56) Entgegenhaltungen:
- WO-A1-03/035448
- DE-U1-202011 051 437
- US-A- 2 670 216
- US-A- 5 451 072

## Beschreibung

Die Erfindung betrifft eine Vorrichtung nach dem Oberbegriff des Anspruchs 1.

### Stand der Technik

Aus dem Stand der Technik sind verschiedene Arten von Vorrichtungen zum Fortbewegen von Personen bekannt. In diesem Zusammenhang beispielsweise auf die DE 20 2010 008 211 U1 verwiesen. Dort ist ein fahrbares Kinderspielzeug, insbesondere Zweirad oder Dreirad, mit einem abnehmbaren Sitz, dadurch gekennzeichnet, dass der Sitz eine Halteeinrichtung aufweist, welche ausgebildet ist, um den vom Kinderspielzeug abgenommenen Sitz an einer Tischplatte zu befestigen ist.
Aus der DE 20 2011 051 437 U1 wiederum ist eine Vorrichtung zur Fortbewegung einer Person gezeigt, wobei die Vorrichtung zusammenlegbar konstruiert ist.

Weiterhin offenbart die WO 03/035448 A1 eine Vorrichtung gemäß dem Oberbegriff von Anspruch 1, welche mit einem Sitzmodul und einem Gepäckmodul ausgestattet ist.

Schließlich ist noch die US 2,670,216 A anzuführen. Hier wird ein zusammenklappbarer Kinderwagen mit einem Sonnenschutzmarkise offenbart.

### Aufgabe der Erfindung

Die Aufgabe der Erfindung ist es eine Vorrichtung zur Verfügung zu stellen, welche auf einfache und praktikable Weise ermöglicht, dass eine Person und Güter gemeinsam transportiert werden können und der Nutzer hierbei eine grösstmögliche Flexibilität erhält. Die Vorrichtung soll im Gebrauchsfall schnell und einfach der Nutzung zugeführt werden können und im Nicht- Gebrauchsfall schnell und platzsparend verstaut werden können.

### Lösung der Aufgabe

Zur Lösung der Aufgabe führen die Merkmale des Anspruchs 1.

Eine erfindungsgemässe Vorrichtung zum Fortbewegen einer Person meint insbesondere ein Gefährt. Als Gefährt kommen hier wiederum Zweiräder, Dreiräder oder Vierräder in Betracht. Als Person werden Personen ab einem Alter und Befähigung bezeichnet, die sich aus eigenen Kräften auf der Vorrichtung halten können, ohne dass sie Gefahr laufen herunterzufallen.

Ein erfindungsgemässes Ausführungsbeispiel weist einen Tragrahmen auf. Dieser Tragrahmen ist aus einem ersten Tragelement und einem zweiten Tragelement gebildet, wobei das zweite Tragelement in etwa mittig der Gesamtlänge des ersten Tragelements durch ein Gelenk an das erste Tragelement angefügt ist. Das Gelenk bildet einen Schwenkpunkt. An dem Schwenkpunkt sind die beiden Tragelemente schwenkbar miteinander verbunden. Durch die mögliche Schwenkbewegung des zweiten Tragelements zu dem ersten Tragelement wird erreicht, dass die Vorrichtung zusammenlegbar ist. Zusammengelegt bedeutet hierbei, dass das zweite Tragelement zum ersten Tragelement hingeschwenkt werden kann. Vorteilhaft hierbei ist eine platzsparende Aufbewahrung der Vorrichtung im Nicht-Gebrauchsfall.

Das Gelenk ist hierbei in eine Haltekonstruktion eingefasst. Die Haltekonstruktion ist an das erste Tragelement angefügt. Das zweite Tragelement ist hierbei über eine Spannvorrichtung in verschiedenen Positionen zum ersten Tragelement festlegbar. Dazu muss der Nutzer lediglich einen Knopf betätigen, um eine bereits gewählte Position freizugeben. Anschliessend kann der Nutzer durch Schwenken des zweiten Tragelements zu dem ersten Tragelement, das zweite Tragelement an einer anderen definierten Position festlegen.

Dies geschieht in einem bevorzugten Ausführungsbeispiel dadurch, dass in der Haltekonstruktion Federstifte eingelassen sind, welche durch Betätigen des Knopfs in die Haltekonstruktion hineingedrückt werden und dadurch das zweite Tragelement derart freigeben, dass Bohrungen des zweiten Tragelements nicht mehr durch die Federstifte gesperrt sind. Dadurch kann das zweite Tragelement entlang der Haltekonstruktion verschwenkt werden. Dies kann beispielsweise geschehen bis andere Federstifte in die freigegebenen Bohrungen des zweiten Tragelements eingreifen und das zweite Tragelement auf diese Weise in einer definierten Position zum ersten Tragelement festlegen.

Die Schwenkbewegung ist in einem bevorzugten Ausführungsbeispiel derart möglich, dass die Rollenelemente des zweiten Tragelements von den Rollenelementen des ersten Tragelements weg bis zu 90° schwenkbar sind. Es ist aber auch möglich, dass eine Schwenkbewegung von bis zu 180° durchgeführt werden kann.

Das erste Tragelement ist hierbei in der Regel so ausgelegt, dass die zu transportierenden Güter und zumindest ein Teil des Gewichts der zu transportierenden Person aufgenommen werden soll. Das zweite Tragelement dient hingegen fast ausschliesslich der Aufnahme des Gewichts der zu transportierenden Person. Dazu bildet das zweite Tragelement eine rollende Verbindung mit dem Untergrund und stützt das Gewicht der zu transportierenden Person gegen den Untergrund ab.

Die erfindungsgemässe Vorrichtung ist bevorzugt derart gestaltet, dass das erste Tragelement eine Rohrform aufweist. Das bedeutet, dass eine röhrenförmige Konstruktion vorhanden ist. Innerhalb des ersten Tragelements sind teleskopförmig weitere Führungsstangen vorhanden, welche zueinander verschiebbar und gemeinsam aus dem ersten Tragelement herausziehbar und an definierten Positionen festlegbar angeordnet sind. Das zweite Tragelement hingegen stellt sich als eine im Wesentlichen aus zwei Röhrensträngen hergestellte Konstruktion dar.

Das erste Tragelement weist eine teleskopförmig in das erste Tragelement einfahrbare erste Führungsstange auf. Dies bedeutet im Einzelnen, dass die erste Führungsstange zum Teil oder ganz in das erste Tragelement eingefahren werden kann. Vorteilhaft hierbei ist, dass beim Nicht-Gebrauch sehr einfach Platz gespart werden kann.

Weiter ist innerhalb der ersten Führungsstange eine zweite Führungsstange eingefasst, welche wiederum im Wesentlichen vollständig aus der ersten Führungsstange aus- und wieder einschiebbar ist. Dadurch wird ebenfalls vorteilhaft erreicht, dass bei Nicht-Gebrauch der Vorrichtung Platz gespart werden kann, in dem die erste Führungsstange und die zweite Führungsstange in das erste Tragelement eingeschoben werden können.

Weiterhin weist die erfindungsgemässe Vorrichtung bei der ersten Führungsstange eine erste Sperranordnung auf. Die erste Sperranordnung dient der Festlegung der ersten Führungsstange in dem ersten Tragelement. Weiter weist die zweite Führungsstange eine zweite Sperranordnung auf. Die zweite Sperranordnung dient der Festlegung der zweiten Führungsstange in der ersten Führungsstange. Hierbei soll insbesondere die teleskopförmige Bewegung der Führungsstangen in dem ersten Tragelement festgelegt werden können. Im Einzelnen kann dies durch eine Wirkverbindung von Federstiften und Bohrungen geschehen, wobei die Federstifte des ersten Tragelements in Bohrungen der ersten Führungsstange und Federstifte der ersten Führungsstange in Bohrungen der zweiten Führungsstange eingreifbar ausgebildet sein können. Eine umgekehrte Anordnung von Bohrungen und Federstiften ist genauso gegeben, wie eine Mischform aus beiden Anordnungen.

Die beiden Röhrenstränge sind in einem bevorzugten Ausführungsbeispiel an einer Zusammenführung miteinander verbunden, wobei die Zusammenführung bevorzugt nahe des Gelenks zwischen dem ersten und dem zweiten Tragelement ausgebildet ist. Dies führt zu einer verbesserten Gewichtsverteilung und erleichtert die Nutzung der erfindungsgemässen Vorrichtung. Ausserdem ist vorteilhaft an dieser Konstruktion, dass ein einfacher und stabiler Aufbau ermöglicht wird.

Weiter weist die erfindungsgemässe Vorrichtung ein Rollenelement auf. Die Anzahl der Rollenelemente ist insbesondere danach auszurichten, ob beispielsweise ein Zweirad, Dreirad oder Vierrad in der Vorrichtung gebildet werden sollen. Ein besonders bevorzugtes Ausführungsbeispiel ist ein Vierrad. Vorteilhaft an dieser Ausführungsform ist gerade der Umstand, dass durch ihre Rollen und Rollenelemente eine ausreichende Stabilität erreicht wird, wobei die Rollenelemente zum Lenken der gesamten Vorrichtung eingesetzt werden können. In einem Ausführungsbeispiel sind die Rollenelemente des zweiten Tragelements hierzu drehbar gelagert. Als drehbare Lagerung wird hierbei bezeichnet, dass die Rollen bis zu 360° um eine zugeordnete Drehachse gedreht werden können. Daneben sind auch Rollen vorhanden, welche starr aufgehängt sind und der einfachen Fortbewegung der Güter dienen. Dazu sind die Rollen im Gebrauchszustand zwischen den zu transportierenden Gütern und dem Untergrund und die Rollenelemente zwischen dem Sitz und dem Untergrund angeordnet.

Als Rollen bzw. Rollenelemente kommen in der Regel Kunststoff-Metall-Rollen zum Einsatz, welche beispielsweise bereits bei Skootern, Tretrollern, Rollschuhen oder Inlineskatern zum Einsatz kommen. Grösse und Umfang der eingesetzten Rollenelemente kann unterschiedlich gestaltet sein und richtet sich nach den Anforderungen der einzelnen erfindungsgemässen Vorrichtung. Vorteilhaft gerade an den Rollenelementen von Inlineskatern ist die günstige Möglichkeit der Beschaffung gepaart mit guten Laufeigenschaften und niedriger Geräuschentwicklung. Eine Kombination aus verschiedenen Arten von Rollenelementen beispielsweise für das erste Tragelement und das zweite Tragelement ist ebenfalls vom Erfindungsgedanken mitumfasst. Vorteilhaft hierbei ist der Umstand, dass je nach Einsatz des ersten Tragelements für leichte oder schwere Güter oder des zweiten Tragelements für leichte oder schwere Personen eine Anpassung vorgenommen werden kann. Die Vorrichtung weist ausserdem einen Sitz auf. Dieser Sitz kann gepolstert oder ungepolstert sein. Er kann aus Kunststoff oder Metall bestehen und jegliche Form und Grösse aufweisen, solange sie mit den Gesamtanforderungen der Vorrichtung in Einklang zu bringen sind. Vorteilhaft an dem Sitz ist die angenehme Möglichkeit des Personentransports. Der Sitz ist so zu gestalten, dass dieser zum Einen wenig Gewicht aufweist und zum Anderen der zu befördernden Person auf einfache Weise ermöglicht auf- und abzusteigen.
Der Sitz ist hierbei mit der Haltekonstruktion derart verbunden, als dass die Haltekonstruktion ausreichende Unterstützung für den Sitz bietet, um der Person einen sichere Sitzposition zu gewährleisten.
In einem anderen Ausführungsbeispiel ist es auch denkbar, dass beide Tragelemente entweder als stabförmige Tragelemente oder beide Tragelemente als jeweils zwei rohrförmige Stränge ausgebildet sein können. Vorteilhaft an der bevorzugten Ausführung ist lediglich der Umstand, dass mit einfachen Mitteln, die kostengünstig zu erhalten sind eine sehr stabile Konstruktion erreicht wird.

In einem anderen bevorzugten Ausführungsbeispiel weist die erfindungsgemässe Vorrichtung eine Fussraste auf. Diese Fussraste dient der Aufnahme der Füsse der zu befördernden Person. Die Fussraste ist hierbei bevorzugt an einem der beiden oder an beiden Tragelementen angebracht. In einem besonders bevorzugten Ausführungsbeispiel ist die Fussraste zwischen einem ersten Rollenarm und einem zweiten Rollenarm des zweiten Tragelements angebracht. Dabei bildet die Fussraste eine stabilisierende Querverbindung zwischen den beiden Rollenarmen. Vorteilhaft an den Fussrasten ist der Umstand, dass die zu befördernden Person während der Fortbewegung die Füsse zum Ausruhen auflegen kann. Ein weiterer Vorteil ist darin zu sehen, dass die Füsse durch das am Boden entlang schleifen keine Bremswirkung auf den Nutzer der Vorrichtung ausüben.

In einem anderen Ausführungsbeispiel der Erfindung weist der erste Führungsstab des ersten Tragelements einen Haltegriff auf, welcher beispielsweise eine Stab- oder Halbkreisform ausbilden kann. Der Haltegriff kann aber auch als eine T-Form ausgebildet sein. Form und Ausmass des Haltegriffs richten sich nach den zu erfüllenden Erfordernissen, welche darin liegen, dass die zu befördernde Person eine Möglichkeit hat, sich festzuhalten.

Daneben weist der zweite Führungsstab einen Zuggriff auf. Der Zuggriff ist fest an dem zweiten Führungsstab angebracht. Er dient der Aufgabe dem Nutzer das Wegziehen der erfindungsgemässen Vorrichtung zu erleichtern. Der Zuggriff kann stab- oder halbkreisförmig ausgebildet sein.

In dem erfindungsgemässen Ausführungsbeispiel ist das erste Tragelement derart gestaltet, dass ein Koffer oder ein Korb an das erste Tragelement angefügt und wieder gelöst werden kann. Dies kann beispielsweise durch Anclipsen des Koffers oder des Korbs geschehen. Hierzu kann der Koffer oder der Korb eine Ausnehmung aufweisen, die den Formen des ersten Tragelements derart angepasst ist, dass der Koffer oder der Korb direkt unterhalb des Sitzes an das erste Tragelement angeclipst werden kann.

Ausserdem ist es möglich, dass der Koffer oder der Korb auf eine andere Weise wiederlösbar mit dem zweiten Tragelement verbunden werden kann. Dies kann beispielsweise von der Fixierung mittels eines Gurts oder Gummizugs bis hin zur Verwendung von anderen Lösemechanismen erfolgen. In diesem Zusammenhang ist lediglich darauf zu achten, dass ein rein manuelles Anfügen und Abnehmen ohne den Einsatz von Werkzeug möglich sein soll. Unterhalb des Sitzes bezeichnet hierbei den Bereich zwischen Sitz und Rollenelementen des ersten Tragelements.

Der Koffer oder der Korb inklusive des ersten und zweiten Tragelements sowie der dazugehörigen Teile im Nicht-Gebrauchszustand weist hierbei bevorzugt solche Masse auf, als dass er als Handgepäck in ein Flugzeug mitgenommen werden kann. Der Koffer wird entsprechend etwas kleiner ausgeführt als die erlaubten Ausmasse von Handgepäck, sodass der Koffer oder der Korb inklusive des ersten und zweiten Tragelements inklusive der anderen erfindungsgemässen Merkmale als Handgepäck mitgenommen werden kann.

### Figurenbeschreibung

Weitere Vorteile, Merkmale und Einzelheiten der vorliegenden Erfindung werden anhand der Beschreibung eines Ausführungsbeispiels beschrieben Hierzu werden Figuren verwandt. Diese zeigen in
Figur 1 eine Seitenansicht von schräg oben auf eine erfindungsgemässe Vorrichtung;
Figur 2 eine Ansicht von schräg hinten auf eine erfindungsgemässe Vorrichtung mit Koffer;
Figur 3 eine weitere Ansicht der Figur 2 von schräg vorne;
Figur 4 eine Ansicht von schräg hinten auf eine andere erfindungsgemässes Verwendung der erfindungsgemässen Vorrichtung;
Figur 5 eine andere Ansicht der Figur 4 von schräg vorne;
Figur 6 eine Seitenansicht der Vorrichtung nach den Figuren 4 und 5;
Figur 7 eine Vorderansicht der Vorrichtung nach den Figuren 4 und 5; und
Figur 8 eine Seitenansicht der vollständig eingefahrenen erfindungsgemässen Vorrichtung nach den Figuren 6 und 7.

Grundsätzlich soll hier ein und dasselbe Ausführungsbeispiel beschrieben werden. Daher wird im Rahmen der Ausführungen darauf verzichtet, zu jeder Figur jedes Merkmal mit dazugehöriger Positionszahl zu wiederholen. Es wird ausdrücklich erklärt, dass einmal gemachte Ausführungen zu einem Merkmal mit der entsprechend gleichbleibenden Positionszahl auch für die weiteren Figuren gelten soll, solange das gleiche Merkmal mit der gleichen Positionszahl beschrieben wird.

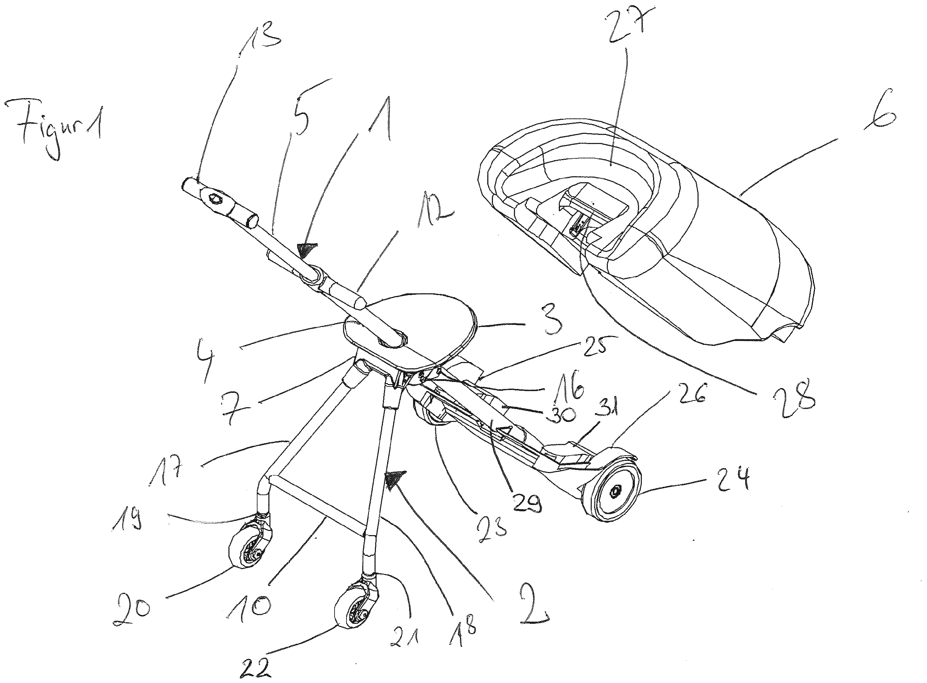

In Figur 1 ist eine erfindungsgemässe Vorrichtung gezeigt. Diese erfindungsgemässe Vorrichtung besteht in erster Linie aus einem ersten Tragelement 1, einem zweiten Tragelement 2 und einem Sitz 3. Das erste Tragelement 1, das zweite Tragelement 2 und der Sitz 3 weisen eine gemeinsame Haltekonstruktion 7 auf.

Die Haltekonstruktion 7 ist unterhalb des Sitzes 3 zu erkennen. Die Haltekonstruktion 7 ist fest mit dem ersten Tragelement 1 verbunden. Dies ist anhand von Schraubverbindungen 16 zu erkennen.

Das erste Tragelement 1 umfasst eine erste Führungsstange 4 und eine zweite Führungsstange 5, wobei die erste Führungsstange 4 und die zweite Führungsstange 5 teleskopförmig innerhalb des ersten Tragelements 1 angeordnet sein können. In der in Figur 1 gezeigten Ansicht sind die erste Führungsstange 4 und die zweite Führungsstange 5 ausgezogen dargestellt. Dies bedeutet, dass die ursprüngliche Länge des ersten Trageelements 1 fast verdoppelt wurde.

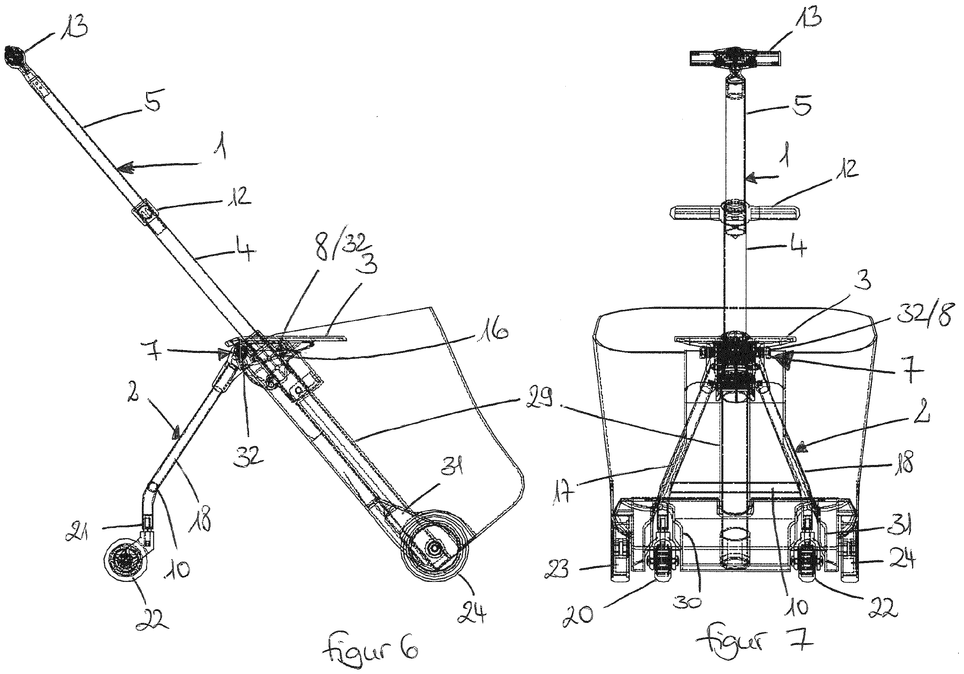

Das Tragelement 1 mit erster Führungsstange 4 und zweiter Führungsstange 5 wiederum ist teleskopartig innerhalb eines Führungsrohres 29 angeordnet. Das Führungsrohr 29 ist insbesondere in den Figuren 6 und 7 deutlich erkennbar.

Die erste Führungsstange 1 weist einen Haltegriff 12 und die zweite Führungsstange 5 weist einen Zuggriff 13 auf. Der Haltegriff 12 dient dazu, dass eine Person, welche auf dem Sitz 3 Platz genommen hat, eine Möglichkeit zum Festhalten hat. Der Zuggriff 13 dient dem besseren Wegziehen der erfindungsgemässen Vorrichtung durch einen Nutzer.

Ausserdem ist in Figur 1 gezeigt, dass das zweite Tragelement 2 aus einem ersten Röhrenstrang 17 und einem zweiten Röhrenstrang 18 besteht.

Zwischen dem ersten Röhrenstrang 17 und dem zweiten Röhrenstrang 18 ist eine Fussraste 10 daran angeordnet, so dass eine Person, welche auf dem Sitz 3 Platz genommen hat, ihre Füsse ohne grössere Schwierigkeiten auf die Fussraste 10 setzen könnte.

Ausserdem weist der erste Röhrenstrang 17 andernends der Haltekonstruktion 7 ein Rollenelement 20 auf, welches über ein zugeordnetes Drehgelenk 19 um 360° schwenkbar ausgebildet ist. In gleicher Weise ist andernends der Haltekonstruktion 7 an dem zweiten Röhrenstrang 18 ein Rollenelement 22 vorgesehen, welches über ein zugeordnetes Drehgelenk 21 ebenfalls um 360° schwenkbar ist.

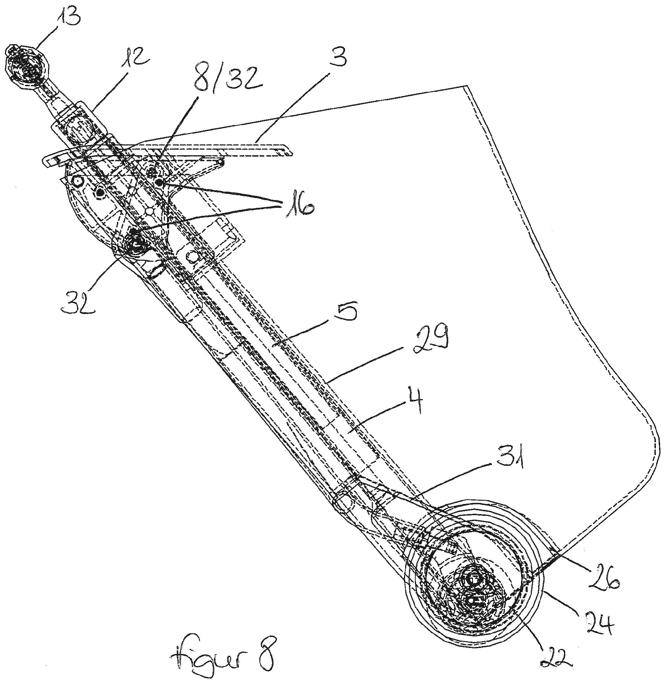

Figur 8 zeigt in Bezug of die oben beschriebenen Merkmale die Vorrichtung, wenn sowohl die erste Führungsstange 4 als auch die zweite Führungsstange 5, d.h. das ersten Tragelement 1 in dem Führungsrohr 29 einfahren ist. Darüber hinaus ist das zweite Tragelement 2, bestehend aus dem ersten Röhrenstrang 17 und dem zweiten Röhrenstrang 18 eingeklappt und lagert an dem Führungsrohr 29 an. Die Rollenelemente 20 und 22 sind dabei in entsprechenden Aufnahmen 30 und 31 aufgenommen, welche in einem Sperrbügel 9 angeordnet sind. Der Sperrbügel 9 wiederum ist zwischen zwei Rollen 23 und 24 angeordnet.

Die beiden Rollen 23 und 24 sind andernends des Zuggriffs 13 an dem ersten Tragelement 1 bzw. dem Führungsrohr 29 angeordnet. Die erste Rolle 23 verfügt über eine Abdeckung 25 und die zweite Rolle 24 verfügt über eine Abdeckung 26.

In dem hier gezeigten Ausführungsbeispiel ist das zweite Tragelement um eine Schwenkachse 32 herum schwenkbar an dem ersten Tragelement 1 bzw. der Haltekonstruktion 7 angeordnet. Somit kann an der Haltekonstruktion 7 ein Verschwenken des zweiten Tragelements 2 erfolgen. Dies ist vor allem deswegen möglich, weil die Haltekonstruktion 7 fest mit dem ersten Tragelement 1 verbunden ist.

Das zweite Tragelement 2 ist über eine Federstift-Bohrungs-Konstruktion 8 an der Haltekonstruktion 7 schwenkbar angeordnet. Ein nicht näher gezeigtes Zusammenspiel von Federstiften und Bohrungen, welches als Spannvorrichtung bezeichnet wird, erlaubt das Festlegen des zweiten Tragelements 2 in vorgegebenen Schwenkpunkten in Relation zu dem ersten Tragelement 1.

Dazu muss der Nutzer lediglich einen nicht gezeigten Knopf betätigen, um eine bereits gewählte Position freizugeben. Durch Betätigen des Knopfs wird ein Federstift der Haltekonstruktion 7 aus der festlegenden Bohrung des zweiten Tragelements 2 herausgedrückt, so dass das zweite Tragelement 2 an der Haltekonstruktion 7 geschwenkt werden kann. Anschliessend kann der Nutzer durch Schwenken des zweiten Tragelements 2 bspw. zu dem ersten Tragelement 1 hin eine definierte Position festlegen, indem er andere, ebenfalls nicht gezeigte Federstifte durch Überstreifen des zweiten Tragelements 2 und anschliessendes Eingreifen in die Bohrung des zweiten Tragelements 2 positioniert.

Um dann wiederum eine Freigabe des zweiten Tragelements 2 zu bewirken, muss der Nutzer wiederum den nicht gezeigten Knopf betätigen, um die Federstifte in die Haltekonstruktion 7 hineinzudrücken und somit das zweite Tragelement 2 zu entsperren. Damit eine Schwenkbewegung des zweiten Tragelements 2 an der Haltekonstruktion 7 möglich ist, verfügt das zweite Tragelement 2 in der Haltekonstruktion 7 über die Schwenkachse 32.

Weiter ist in Figur 1 zu erkennen, wie ein Koffer 6 eine Ausnehmung 27 aufweist, welche zur Aufnahme des Sitzes 3 an diesen angepasst ist. Ausserdem zeigt der Koffer 6 eine nicht näher beschriebene Anclipsvorrichtung 28, mit der der Koffer 6 an das erste Tragelement 1 der erfindungsgemässen Vorrichtung zwischen dem Sitz 3 und den Rollen 24 und 25 angeclipst werden kann.

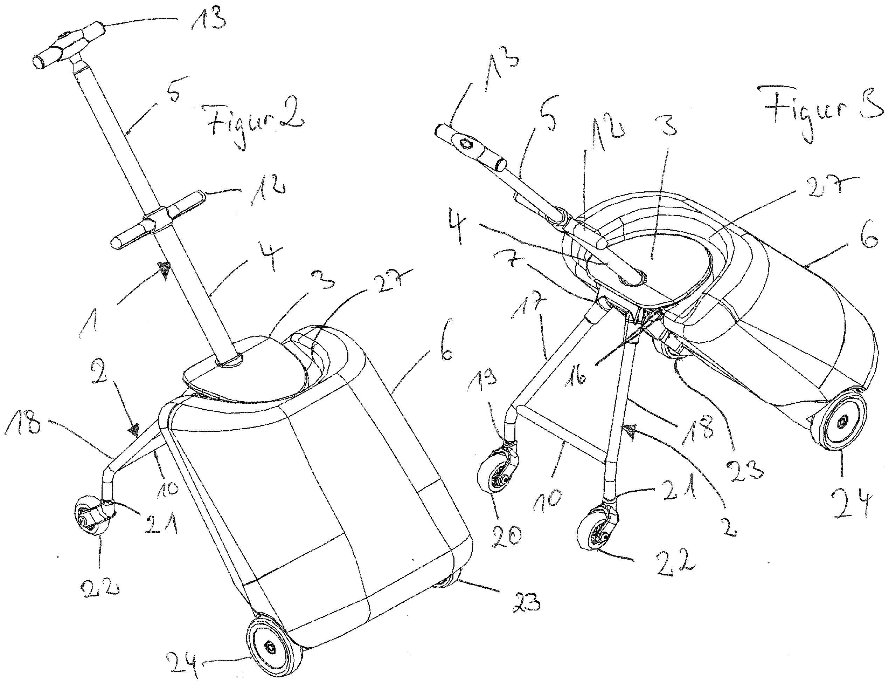

Figur 2 zeigt nun den angeclipsten Koffer 6 an das erste Tragelement 1. Dort ist zu erkennen, wie der Sitz 3 in die Ausnehmung 27 hineinragt. Ausserdem ist nochmals gut zu erkennen, wie der zweite Führungsstab 5 in dem ersten Führungsstab 4 teleskopförmig gelagert ist. Zu den einzelnen Positionszahlen wird auf eine Wiederholung der Ausführungen aus Figur 1 verzichtet. Vielmehr werden die in Figur 1 gemachten Ausführungen zu den gleichbenannten Merkmalen auch für die Figur 2 als offenbart angesehen.

In Figur 3 ist eine andere Ansicht der Figur 2 zu erkennen.

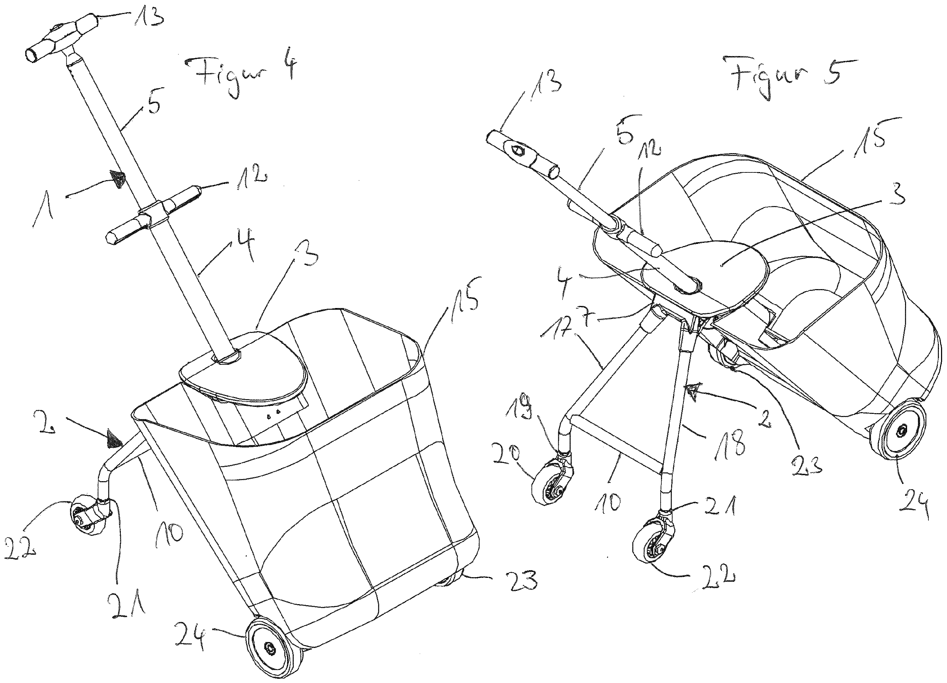

In Figur 4 wiederum ist an Stelle des Koffers 6 ein Korb 15 an das erste Tragelement 1 angeclipst. Der Korb 15 ist wieder zwischen dem Sitz 3 und den Rollen 24 und 25 angebracht.

In Figur 5 ist eine andere Ansicht der Figur 4 gezeigt.

Die Figuren 6 und 7 zeigen eine Seitenansicht der Vorrichtung bzw. eine Vorderansicht der Vorrichtung.

In Figur 8 wiederum ist eine Seitenansicht der vollständig eingefahrenen erfindungsgemässen Vorrichtung gezeigt.

**Positionszahlenliste**

| | |
|---|---|
| 1. Erstes Tragelement | 31. Aufnahme |
| 2. Zweites Tragelement | 32. Schwenkachse |
| 3. Sitz | |
| 4. Erste Führungsstange | |
| 5. Zweite Führungsstange | |
| 6. Koffer | |
| 7. Haltekonstruktion | |
| 8. Drehachse | |
| 9. Sperrbügel | |
| 10. Fussraste | |
| 11. | |
| 12. Haltegriff | |
| 13. Zuggriff | |
| 14. | |
| 15. Korb | |
| 16. Schraubverbindung | |
| 17. Erster Röhrenstrang | |
| 18. Zweiter Röhrenstrang | |
| 19. Drehgelenk | |
| 20. Rollenelement | |
| 21. Drehgelenk | |
| 22. Rollenelement | |
| 23. Rolle | |
| 24. Rolle | |
| 25. Abdeckung | |
| 26. Abdeckung | |
| 27. Ausnehmung | |
| 28. Anclipsvorrichtung | |
| 29. Führungsrohr | |
| 30. Aufnahme | |

## Patentansprüche

1. Vorrichtung zum Fortbewegen einer Person und Gütern
- mit einem ersten Tragelement (1) und einem zweiten Tragelement (2),
- wobei das zweite Tragelement (2) über eine Haltekonstruktion (7) an dem ersten Tragelement (1) schwenkbar festlegbar anordnenbar ist
- mit einem Sitz (3),
**dadurch gekennzeichnet,**
**dass** das erste Tragelement (1) durch den Sitz (3) greift.

2. Vorrichtung nach Anspruch 1, **dadurch gekennzeichnet, dass** das erste Tragelement (1) eine Rolle (23, 24) aufweist und das zweite Tragelement (2) ein Rollenelement (20, 22) aufweist.

3. Vorrichtung nach Anspruch 1 oder 2, **dadurch gekennzeichnet, dass** das zweite Tragelement (2) eine Fussraste (10) umfasst.

4. Vorrichtung nach einem der vorigen Ansprüche, **dadurch gekennzeichnet,**
**dass** das erste Tragelement (1) aus einem Grundrohr besteht, in dem teleskopförmig eine erste Führungsstange (4) vorhanden ist.

5. Vorrichtung nach Anspruch 4, **dadurch gekennzeichnet, dass** in der ersten Führungsstange (4) teleskopförmig eine zweite Führungsstange (5) umfasst ist.

6. Vorrichtung nach Anspruch 5, **dadurch gekennzeichnet, dass** die erste Führungsstange (4) in dem Grundrohr und die zweite Führungsstange (5) in der ersten Führungsstange (4) lösbar festlegbar ist.

7. Vorrichtung nach einem der Ansprüche 4 bis 6, **dadurch gekennzeichnet,**
**dass** die erste Führungsstange (4) einen Haltegriff (12) aufweist.

8. Vorrichtung nach einem der Ansprüche 4 bis 7, **dadurch gekennzeichnet,**
**dass** die zweite Führungsstange (5) einen Zuggriff (13) aufweist.

9. Vorrichtung nach einem der vorigen Ansprüche, **dadurch gekennzeichnet,**
**dass** an das erste Tragelement (1) ein Koffer (6) oder ein Korb (15) wiederlösbar festlegbar ist.

10. Vorrichtung nach einem der vorigen Ansprüche, **dadurch gekennzeichnet,**
**dass** das zweite Tragelement (2) in einem Winkel von 0° bis 180°, bevorzugter 0° bis 90° an dem ersten Tragelement (1) schwenkbar festlegbar angeordnet ist.

## Claims

1. A device for transporting a person and goods
- having a first support element (1) and a second support element (2),
- wherein the second support element (2) can be arranged in a pivotally lockable manner on the first support element (1) via a holding construction (7)
- having a seat (3),
**characterised in that**
the first support element (1) reaches through the seat (3) .

2. The device according to Claim 1, **characterised in that** the first support element (1) has a roller (23, 24) and the second support element (2) has a roller element (20, 22).

3. The device according to Claim 1 or 2, **characterised in that** the second support element (2) includes a footrest (10).

4. The device according to one of the preceding claims, **characterised in that** the first support element (1) comprises a main tube in which a first guide rod (4) is provided in a telescopic manner.

5. The device according to Claim 4, **characterised in that** a second guide rod (5) is included in a telescopic manner in the first guide rod (4).

6. The device according to Claim 5, **characterised in that** the first guide rod (4) is releasably lockable in the main tube and the second guide rod (5) is releasably lockable in the first guide rod (4).

7. The device according to one of Claims 4 to 6, **characterised in that** the first guide rod (4) has a holding handle (12).

8. The device according to one of Claims 4 to 7, **characterised in that** the second guide rod (5) has a pulling handle (13).

9. The device according to one of the preceding claims, **characterised in that** a case (6) or a basket (15) is re-releasably lockable on the first support element (1).

10. The device according to one of the preceding claims, **characterised in that** the second support element (2) is arranged such that it is pivotally lockable at an angle of 0° to 180°, more preferably 0° to 90°, on the first support element (1).

## Revendications

1. Dispositif de transport d'une personne et de marchandises
- avec un premier élément de support (1) et un deuxième élément de support (2),
- ledit deuxième élément de support (2) pouvant être disposé de manière pouvant être fixée de manière pivotante par l'intermédiaire d'une structure de support (7) au premier élément de support (1),
- avec un siège (3),
**caractérisé par le fait**
**que** le premier élément de support (1) s'engage à travers le siège (3).

2. Dispositif selon la revendication 1, **caractérisé par le fait que** le premier élément de support (1) présente un rouleau (23, 24) et que le deuxième élément de support (2) présente un élément de roulement (20, 22).

3. Dispositif selon la revendication 1 ou 2, **caractérisé par le fait que** le deuxième élément de support (2) comporte un cale-pied (10).

4. Dispositif selon l'une des revendications précédentes, **caractérisé par le fait que** le premier élément de support (1) consiste en un tube de base dans lequel est présente de forme télescopique une première tige de guidage (4).

5. Dispositif selon la revendication 4, **caractérisé par le fait que** dans la première tige de guidage (4) est comprise de manière télescopique une deuxième tige de guidage (5).

6. Dispositif selon la revendication 5, **caractérisé par le fait que** la première tige de guidage (4) peut être fixée de manière amovible dans le tube de base et la deuxième tige de guidage (5) peut être fixée de manière amovible dans la première tige de guidage (4).

7. Dispositif selon l'une des revendications 4 à 6, **caractérisé par le fait que** la première tige de guidage (4) présente une poignée (12).

8. Dispositif selon l'une des revendications 4 à 7, **caractérisé par le fait que** la deuxième tige de guidage (5) présente un accès (13).

9. Dispositif selon l'une des revendications précédentes, **caractérisé par le fait qu'**au premier élément de support (1) peut être fixé de manière amovible un coffret (6) ou un panier (15).

10. Dispositif selon l'une des revendications précédentes, **caractérisé par le fait que** le deuxième élément de support (2) est disposé de manière à pouvoir être fixé de manière pivotante selon un angle de 0° à 180°, de préférence de 0° à 90° au premier élément de support (1).
